# EUROPÄISCHE PATENTSCHRIFT

(11) **EP 1 853 845 B1**
(45) Veröffentlichungstag und Bekanntmachung des Hinweises auf die Patenterteilung: **05.10.2011**
(21) Anmeldenummer: 06724868.2
(22) Anmeldetag: 23.02.2006
(51) Int. Cl.: F16N 25/00, F16N 7/30

(54) **VORRICHTUNG ZUM AUFTEILEN EINES MITTELS EINES LUFTSTROMS GEFÖRDERTEN SCHMIERSTOFFSTROMS**
DEVICE FOR SUBDIVIDING A LUBRICANT FLOW CONVEYED BY MEANS OF AN AIR FLOW
DISPOSITIF DESTINE A DISTRIBUER UN FLUX DE LUBRIFIANT REFOULE AU MOYEN D'UN FLUX D'AIR

(30) Priorität: 02.03.2005 DE 102005010132
(43) Veröffentlichungstag der Anmeldung: 14.11.2007
(73) Patentinhaber: Rebs Zentralschmiertechnik GmbH, 40885 Ratingen (DE)
(72) Erfinder: REBS, Alexander, Andreas, 40885 Ratingen (DE)
(74) Vertreter: Cohausz & Florack
(86) Internationale Anmeldenummer: PCT/EP2006/060200
(87) Internationale Veröffentlichungsnummer: WO 2006/092375

(56) Entgegenhaltungen:
- WO-A-2005/022025
- DE-U1- 29 609 855
- US-A- 5 921 349

## Beschreibung

Die Erfindung betrifft eine Vorrichtung zum Aufteilen eines mittels eines Luftstroms geförderten Schmierstoffstroms mit einem Verteilkörper, der eine Vielzahl von Zuströmbohrungen, die von seiner einen Stirnfläche ausgehen und sich längs seiner Längsachse und achsparallel zueinander erstrecken und Abströmbohrungen aufweist, die jeweils mit einer der Zuströmbohrungen verbunden sind und auf einer Umfangsfläche des Verteilkörpers münden.

In Schmiersystemen, die mit derartigen Verteilvorrichtungen ausgestattet sind, wird der zu verteilende Schmierstoff durch die Leitungen des Systems mittels eines turbulent strömenden Gasstroms zu den jeweiligen Schmierstellen getrieben. Der Schmierstoff bildet dabei auf den Leitungswänden aufgrund der koaxial zum Leitungsverlauf gerichteten turbulenten Gasströmung einen dünnen Film aus, der eine gleichmäßige Wellenstruktur aufweist. Dieser Schmierfilm wird aufgrund der Reibung zwischen den aneinander anliegenden Grenzschichten von Gas und Schmierstoff sowie das Aufprallen der Luftströmung auf die Wellenberge vorangetrieben, ohne dass es zu einer Vermischung des Gases mit dem Schmiermittel kommt.

Der wesentliche Vorteil eines derartigen Transports von Schmiermittel zu den Schmierstellen besteht darin, dass der Transport auch kleinster Schmierstoffmengen lageunabhängig, insbesondere unbeeinflusst von der Schwerkraft erfolgen kann. Dies ermöglicht eine exakte Ausbringung von genau dosierten Schmierstoffmengen an der jeweiligen Schmierstelle.

Um bei einerseits minimiertem apparativem Aufwand und andererseits ebenso minimiertem Leistungsbedarf für die Lufterzeugung eine einwandfreie Versorgung aller Schmierstellen sicherzustellen, wird die benötigte Gesamtmenge an Schmierstoff zunächst über eine einzige Versorgungsleitung gefördert und erst kurz vor Erreichen der jeweiligen Schmierstellen auf eine den jeweiligen Schmierstellen entsprechende Anzahl von Teilströmen verteilt. Zu diesem Zweck ist aus der Europäischen Patentschrift EP 0 010 269 B1 eine Verteilvorrichtung bekannt, bei der die Zuführleitung in einer zylindrischen Verteilkammer mündet, die eine Vielzahl von in ihre Umfangsfläche eingeformte, in gleichen Winkelabständen symmetrisch um die Längsachse der Verteilkammer angeordnete Abströmbohrungen aufweist. Aus den Abströmbohrungen sind Gruppen gebildet, denen jeweils eine gleiche Anzahl von in gleichen Winkelabständen zueinander beabstandeten Abströmbohrungen zugeordnet ist. Jede Gruppe von Abströmbohrungen versorgt eine Schmierstelle. Auf diese Weise wird eine gleichmäßige Aufteilung der Schmierstoffmenge auf die zu versorgenden Schmierstellen erreicht. Die symmetrische Aufteilung der Abströmbohrungen stellt dabei sicher, dass die durch den Einfluss der Schwerkraft verursachten Ungleichförmigkeiten auf ein Minimum reduziert sind. Je größer die Anzahl von Bohrungen, desto besser ist die erzielte Gleichmäßigkeit der Verteilung.

Eine praktische Ausführung der aus der EP 0 010 269 B1 bekannten Vorrichtung weist einen zylindrischen Verteilkörper auf, in dessen Umfang umlaufende Umfangsnuten eingeformt sind, deren Anzahl der Zahl der zu versorgenden Schmierstellen entspricht. Der Verteilkörper ist durchzogen von achsparallel zueinander und zur Längsachse des Verteilkörpers angeordneten Zuströmbohrungen, deren Eintrittsöffnung auf einer Stirnfläche des Verteilkörpers liegen. Die Zuströmbohrungen sind in gleichen Winkelabständen gleichmäßig um die Längsachse des Verteilkörpers verteilt positioniert.

Jede Zuströmbohrung mündet in einer Abströmbohrung, die in radialer Richtung zu jeweils einer der Umfangsnuten führt. Jeweils eine Gruppe von den auf diese Weise aus jeweils einer Zuström- und einer Abströmbohrung gebildeten Kanälen ist dabei gemeinsam einer der Umfangsnuten zugeordnet. Die Zuordnung der Zuström- und Abströmbohrungen erfolgt dabei nach dem Vorbild der EP 0 010 269 B1 in der Weise, dass jeder Umfangsnut hinsichtlich des Schwerkrafteinflusses gleichwertige Kanäle zugeordnet sind.

Im Fall einer bekannten Verteilvorrichtung zur Versorgung von sieben Schmierstellen bedeutet dies, dass in den Verteilkörper beispielsweise 21 Zuströmbohrungen eingebracht sind. Von diesen Zuströmbohrungen sind beispielsweise die 1., 8. und 15. als erste Gruppe der ersten Umfangsnut, die 2., 9. und 16. der zweiten Umfangsnut, die 3., 10. und 17. der dritten Umfangsnut etc. zugeordnet.

Das Dokument JP 2005076774 offenbart eine Vorrichtung zum Aufteilen eines mittels eines Gasstroms geförderten Schmierstoffstroms mit mindestens zwei Verteilkörpern, die eine Vielzahl von Zuströmbohrungen, die von ihrer Stirnfläche ausgehen und sich längs ihrer Längsachsen und achsparallel zueinander erstrecken und Abströmbohrungen aufweisen.

Die große Anzahl von Zuström- und Abströmbohrungen macht die Herstellung der bekannten Verteilvorrichtungen auch dann noch schwierig und fertigungstechnisch aufwändig, wenn die Anzahl der pro Schmierstellen vorgesehenen Bohrungen auf ein im Hinblick auf die Gleichmäßigkeit der Verteilung noch vertretbares Minimum reduziert wird. Hinzu kommt, dass für den Anschluss der zu den jeweiligen Schmierstellen führenden Leitungen ein gewisser Raum benötigt wird, der eine bestimmte Mindestbreite der Umfangsnuten erforderlich macht. Dies und die Notwendigkeit, zwischen den Umfangsnuten Dichtringe anzuordnen, für die ebenfalls Nuten erforderlich sind, führen unvermeidbar zu einer relativ großen Baulänge der bekannten Vorrichtung.

Ausgehend von dem voranstehend erläuterten Stand der Technik bestand die Aufgabe der Erfindung darin, eine Vorrichtung zum Verteilen eines Gas-/Schmierstoffstroms zu schaffen, die einfacher hergestellt werden kann und die es dennoch erlaubt, eine große Anzahl von Schmierstellen über eine solche Vorrichtung zu versorgen.

Bei einer Vorrichtung der eingangs genannten Art ist diese Aufgabe erfindungsgemäß dadurch gelöst worden, dass der Verteilkörper aus mindestens zwei Teilkörpern zusammengesetzt ist, die an einander zugeordneten Stirnflächen dicht aneinander liegen, die von Zuströmbohrungen durchstoßen sind und jeweils mindestens ein Formelement aufweisen, wobei die Formelemente der Teilkörper gemeinsam ein Formelementepaar bilden, durch das die Teilkörper formschlüssig und lagerichtig miteinander verbunden sind.

Bei einer erfindungsgemäßen Vorrichtung ist der Verteilkörper in Längsrichtung in mindestens zwei Teile geteilt. Auf diese Weise ist die Länge der Zuströmbohrungen, die von den stirnseitigen Eintrittsöffnungen bis zu jeweils am weitesten von den Eintrittsöffnungen entfernt liegenden Abströmbohrungen führen, ebenfalls in mindestens zwei Teile unterteilt. Durch die so erzielte Verkürzung der jeweils herzustellenden Bohrungen lassen sie sich wesentlich einfacher in den Verteilkörper einbringen als dies beim Stand der Technik der Fall war. So müssen bei einer erfindungsgemäßen Vorrichtung nicht mehr extrem lange und gleichzeitig dünne Bohrer eingesetzt werden, sondern es können kürzere Bohrer verwendet werden, die sich beim Bohren wesentlich stabiler verhalten.

Überraschend hat sich in diesem Zusammenhang herausgestellt, dass der unvermeidlich Strömungsverluste mit sich bringende Übergang zwischen den einzelnen Teilkörpern des Verteilkörpers einer erfindungsgemäßen Vorrichtung keine wesentlichen Störungen des Verteilergebnisses verursacht. Dies wird dadurch sichergestellt, dass die Formteile jeweils Formelemente aufweisen, durch die sie formschlüssig so miteinander verbunden sind, dass ihre relative Lage stets optimal ausgerichtet ist.

Mit der Erfindung ist es so möglich, mit herkömmlichen Werkzeugmaschinen und vermindertem Aufwand Verteiler herzustellen, die geeignet sind, eine große Anzahl von Schmierstellen gleichzeitig mit dem benötigten Schmierstoff zu versorgen.

Aufgrund der bei erfindungsgemäßer Gestaltung in Folge der verkürzten Bohrungslängen ermöglichten höheren Fertigungsgenauigkeit können dabei die Abstände zwischen den Zuströmkanälen auf ein Minimum reduziert werden, so dass auch der für den Verteilkörper erforderliche Bauraum auf ein Minimum reduziert werden kann. So lassen sich in erfindungsgemäßer Weise insbesondere solche Verteilvorrichtungen mit hoher Präzision herstellen, bei denen eine große Anzahl von Zuströmbohrungen in regelmäßigen Winkelabständen und enger Nachbarschaft um die Längsachse des Verteilkörpers herum verteilt sind. Der Abstand zwischen den Zuströmbohrungen kann dabei problemlos weniger als 1 mm, insbesondere weniger als 0,5 mm, betragen.

Wie beim Stand der Technik lassen sich auch bei einer erfindungsgemäßen Vorrichtung die Abströmbohrungen jeweils zu Gruppen zusammenfassen und jeder Gruppe ein Umfangssegment des Verteilkörpers zuordnen. Dabei kann, ebenfalls wie beim Stand der Technik, jedes der betreffenden Umfangssegmente als Umfangsnut ausgebildet sein, um eine besonders einfache Montage der Vorrichtung in einem Maschinengerüst oder einem anderen Gehäuse zu ermöglichen.

Das für die formschlüssige Ausrichtung der Teilkörper vorgesehene Formelementepaar kann fertigungstechnisch einfach dadurch hergestellt werden, dass das Formelementepaar durch einen an dem einen Teilkörper ausgebildeten Vorsprung und eine in den anderen Teilköper korrespondierend eingeformte Ausnehmung gebildet ist. Um die stets lagerichtige Positionierung der Teilkörper bei gleichzeitig vereinfachter Montage zu gewährleisten, können dabei die Formelemente eine von einem Zylinder abweichende Form besitzen. Alternativ oder ergänzend können auch mindestens zwei Formelementepaare vorhanden sein, von denen mindestens eines mit seiner Längsachse versetzt zur Längsachse der Verteilkörper ausgerichtet ist. Derart ausgestaltete Formelemente können dann besonders einfach hergestellt werden, wenn die Formelemente der Formelementepaare eine Zylinderform aufweisen.

Nachfolgend wird die Erfindung anhand einer ein Ausführungsbeispiel darstellenden Zeichnung näher erläutert. Es zeigen jeweils schematisch:

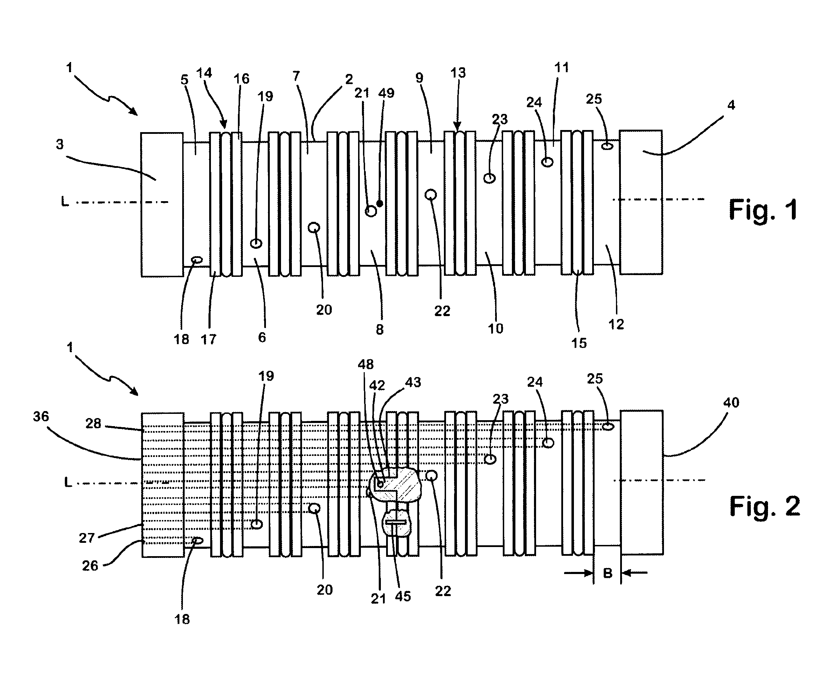

- Fig. 1: eine Verteilvorrichtung in seitlicher Ansicht;
- Fig. 2: die Verteilvorrichtung in teilweise aufgebrochener seitlicher Ansicht;

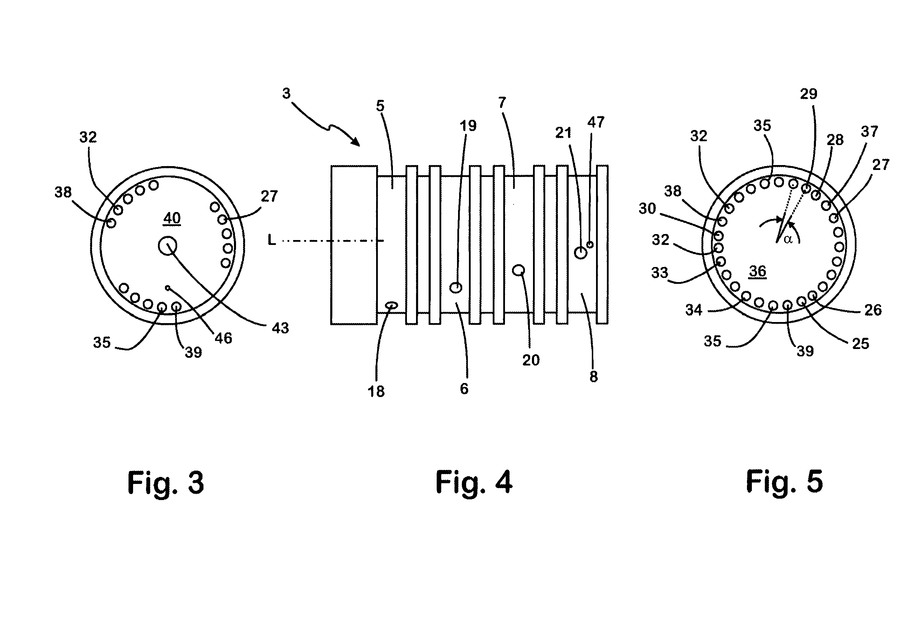

- Fig. 3: einen ersten Teilkörper der Verteilvorrichtung in seitlicher Ansicht;
- Fig. 4: eine frontale Ansicht der einen Stirnfläche des in Fig. 3 dargestellten Teilkörpers;
- Fig. 5: eine frontale Ansicht der zweiten Stirnfläche des in Fig. 3 dargestellten Teilkörpers;

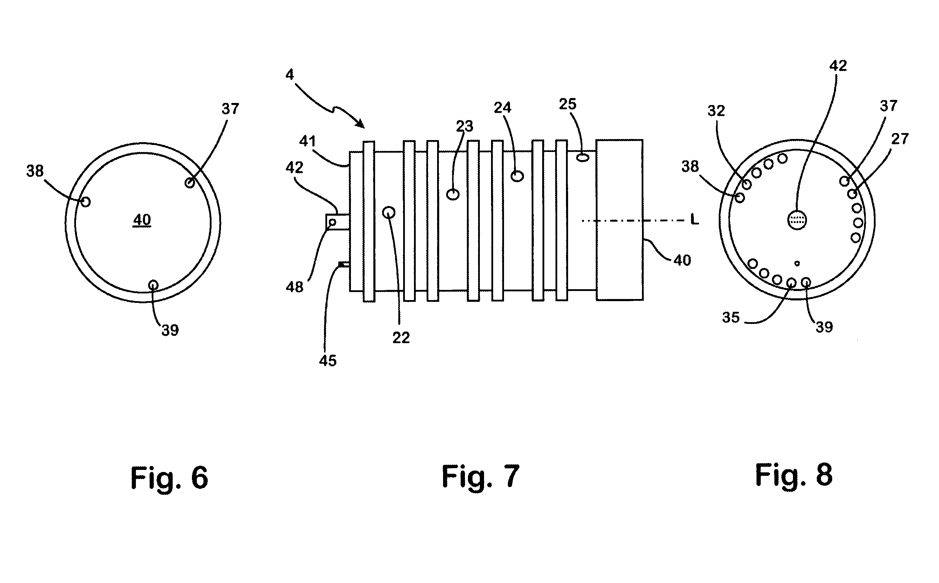

- Fig. 6: einen zweiten Teilkörper der Verteilvorrichtung in seitlicher Ansicht;
- Fig. 7: eine frontale Ansicht der einen Stirnfläche des in Fig. 6 dargestellten Teilkörpers;
- Fig. 8: eine frontale Ansicht der zweiten Stirnfläche des in Fig. 6 dargestellten Teilkörpers.

Die Verteilvorrichtung 1 umfasst einen zylindrisch ausgebildeten Verteilkörper 2, der aus zwei Teilkörpern 3,4 zusammengesetzt ist. In die Umfangsfläche des Verteilkörpers 2 sind acht Umfangsnuten 5 - 12 eingeformt, von denen die einen vier Umfangsnuten 5 - 8 dem ersten Teilkörper 3 und die zweiten vier Umfangsnuten 9 - 12 dem zweiten Teilkörper 4 zugeordnet sind. Die Breite B der Umfangsnuten 5 - 12 ist identisch. Zwischen benachbarten Umfangsnuten 5 - 12 ist jeweils eine weitere Nut 13,14 ausgebildet, in der jeweils eine O-Ringdichtung 15 liegt. Die Umfangsnuten 5 - 12 sind von den zwischen ihnen angeordneten Nuten 13,14 durch um den Umfang des Verteilkörpers 2 umlaufende Stege 16,17 getrennt.

In jeder Umfangsnut 5 - 12 sind in einem Winkelabstand von 120° um die Längsachse L des Verteilkörpers 2 verteilt die Mündungsöffnungen von jeweils drei Abströmbohrungen 18 - 24 angeordnet. Die Abströmbohrungen 18 - 24 führen von der jeweiligen Umfangsnut 5 - 12 in radialer Richtung zu jeweils einer Zuströmbohrung 25 - 34, die sich achsparallel zur Längsachse L des Verteilkörpers 2 und mit geringem Abstand zur Grundfläche der Umfangsnuten 5 - 12 durch den Verteilkörper 2 erstrecken. Die insgesamt vierundzwanzig Zuströmbohrungen 25 - 34 sind dabei in gleichen Winkelabständen α symmetrisch um die Längsachse L herum verteilt positioniert. Die Dicke der zwischen ihnen jeweils verbleibenden Stege beträgt in der Praxis weniger als 0,5 mm.

Die Eintrittsöffnungen 35 der Zuströmbohrungen 25 - 34 liegen auf der einen Stirnfläche 36 des ersten Teilkörpers 3. Zusätzlich zu den Zuströmbohrungen 25 - 34 sind drei Verbindungsbohrungen 37,38,39 durch den Verteilkörper geführt, die auf der freien Stirnfläche 40 des zweiten Teilkörpers 4 enden, so dass insgesamt siebenundzwanzig Längsbohrungen 25 - 34, 37 - 39 in den Verteilerkörper 2 eingebracht sind.

Entsprechend der Zuordnung der Abströmbohrungen 18 - 24 zu den Umfangsnuten 5 - 12 sind die Zuströmbohrung 25 - 34 in acht Gruppen zusammengefasst, wobei die Zuströmbohrungen 25 - 34 jeder Gruppe in gleichen Winkelabständen von 120° um die Längsachse L verteilt angeordnet sind. So sind der ersten Umfangsnut 5 die Zuströmbohrungen 25,29,32, der zweiten Umfangsnut 6 die Zuströmbohrungen 26,30,33 und der achten Umfangsnut 12 die Zuströmbohrungen 27,31,34 zugeordnet.

Entsprechend der Teilung des Verteilkörpers 2 in zwei Hälften sind in den ersten Teilkörper 3 vierundzwanzig Zuströmbohrungen 25 - 34 sowie die drei Verbindungsbohrungen 37 - 39 einzubringen. Von diesen müssen die Verbindungsbohrungen 37 - 39 und die zu den Abströmbohrungen 22 - 24 führenden Zuströmbohrungen gebohrt werden, von denen in der Zeichnung nur den Zuströmbohrungen 28,31,34 Bezugsziffern zugeordnet sind, die zu den der achten Umfangsnut 12 zugeordneten Abströmbohrungen 25 führen.

In den zweiten Teilkörper 4 sind dementsprechend nur die zu den den Umfangsnuten 9 - 12 zugeordneten Abströmbohrungen 22 - 24 führenden Zuströmbohrungen sowie die Verbindungsbohrungen 37 - 39 eingebohrt.

Der lagerichtige Anschluss des zweiten Teilkörpers 4 an den ersten Teilkörper 3 wird durch zwei Formelementepaare gesichert. Das erste dieser Formelementepaare ist durch einen an die dem ersten Teilkörper 3 zugeordnete Stirnfläche 41 des zweiten Teilkörpers 4 angeformten zylindrischen Zapfen 42 und die korrespondierende, ebenfalls zylindrische Ausnehmung 43 gebildet, die in die der Stirnfläche 41 des zweiten Teilkörpers 4 zugeordneten Stirnfläche 44 des ersten Teilkörpers eingeformt ist. Der Zapfen 42 und die Ausnehmung 43 sind dabei koaxial zur Längsachse L ausgerichtet.

Das zweite Formelementepaar ist durch einen Stift 45, der fest in einer entsprechenden Öffnung in der Stirnfläche 41 des zweiten Teilkörpers 4 sitzt, und die zugeordnete, entsprechend dimensionierte Öffnung 46 in der Stirnfläche 44 des ersten Teilkörpers 3 gebildet. Dieses Formelementepaar sitzt um etwa ein Viertel des Durchmessers der Stirnflächen 41,44 versetzt gegenüber der Längsachse L.

Der erste Teilkörper 3 weist eine Querbohrung 47 auf, die die Ausnehmung 43 schneidet. In den Zapfen 42 ist eine entsprechende Querbohrung 48 so eingeformt, dass sie bei montierter Vorrichtung 1 mit der Querbohrung 47 des ersten Teilkörpers 3 fluchtet. Zum festen Verbinden der Teilkörper 3,4 wird ein Splint 49 durch die Querbohrungen 47,48 getrieben.

### BEZUGSZEICHEN

- 1: Verteilvorrichtung
- 2: Verteilkörper
- 3,4: Teilkörper
- 5-12: Umfangsnuten
- 13,14: Nuten
- 15: O-Ringdichtung
- 16,17: Stege
- 18-24: Abströmbohrungen
- 25-34: Zuströmbohrungen
- 35: Eintrittsöffnungen der Zuströmbohrungen 26 - 34
- 36,44: Stirnflächen des ersten Teilkörpers
- 37-39: Verbindungsbohrungen
- 40,41: Stirnflächen des zweiten Teilkörpers 4
- 42: Zapfen
- 43: Ausnehmung
- 45: Stift
- 46: Öffnung
- 47,48: Querbohrungen
- 49: Splint

- α: Winkelabstände
- B: Breite der Umfangsnuten 5 - 12
- L: Längsachse des Verteilkörpers 2

## Patentansprüche

1. Vorrichtung zum Aufteilen eines mittels eines Gasstroms, insbesondere eines Luftstroms, geförderten Schmierstoffstroms mit einem Verteilkörper (2), der eine Vielzahl von Zuströmbohrungen (26-34), die von seiner einen Stirnfläche (36) ausgehen und sich längs seiner Längsachse (L) und achsparallel zueinander erstrecken, und Abströmbohrungen (18-24) aufweist, die jeweils mit einer der Zuströmbohrungen (26-34) verbunden sind und auf einer Umfangsfläche des Verteilkörpers (2) münden,
wobei der Verteilkörper (2) aus mindestens zwei Teilkörpern (3,4) zusammengesetzt ist, die an einander zugeordneten Stirnflächen (41,44) dicht aneinander liegen und die von Zuströmbohrungen (28,31,34) durchstoßen sind dadurch gekennzeichn dass die Stirnfläche jeweils mindestens ein Formelement (42-46) aufweisen,
wobei die Formelemente (42-46) der Teilkörper (3,4) gemeinsam ein Formelementepaar bilden, durch das die Teilkörper (3,4) formschlüssig und lagerichtig miteinander verbunden sind.

2. Vorrichtung nach Anspruch 1, **dadurch gekennzeichnet, dass** die Zuströmbohrungen (26-34) in regelmäßigen Winkelabständen (α) um die Längsachse (L) des Verteilkörpers (2) herum verteilt sind.

3. Vorrichtung nach einem der voranstehenden Ansprüche, **dadurch gekennzeichnet, dass** der Abstand zwischen den Zuströmbohrungen (26-34) weniger als 1 mm beträgt.

4. Vorrichtung nach einem der voranstehenden Ansprüche, **dadurch gekennzeichnet, dass** die Abströmbohrungen (18-24) jeweils zu Gruppen zusammengefasst und jede Gruppe einem Umfangssegment des Verteilkörpers (2) zugeordnet ist.

5. Vorrichtung nach Anspruch 4, **dadurch gekennzeichnet, dass** jeder Gruppe jeweils mindestens drei Abströmbohrungen (18-24) zugeordnet sind.

6. Vorrichtung nach einem der voranstehenden Ansprüche, **dadurch gekennzeichnet, dass** das Formelementepaar durch einen an dem einen Teilkörper (4) ausgebildeten Vorsprung (42) und eine in den anderen Teilköper (3) korrespondierend eingeformte Ausnehmung (43) gebildet ist.

7. Vorrichtung nach Anspruch 6, **dadurch gekennzeichnet, dass** die Formelemente eine von einem Zylinder abweichende Form besitzen.

8. Vorrichtung nach Anspruch 6, **dadurch gekennzeichnet, dass** mindestens zwei Formelementepaare vorhanden sind, von denen mindestens eines versetzt zur Längsachse (L) des Verteilkörpers (2) ausgerichtet ist.

9. Vorrichtung nach Anspruch 8, **dadurch gekennzeichnet, dass** die Formelemente der Formelementepaare eine Zylinderform aufweisen.

## Claims

1. Device for partitioning a lubricant flow, which is conveyed by means of a gas flow, in particular an air flow, with a distributing member (2), which has a large number of feed bores (26-34), which extend from one end face (36) thereof and run along its longitudinal axis (L) and axially parallel with respect to one another, and discharge bores (18-24), which are each connected to one of the feed bores (26-34) and open on a peripheral surface of the distributing member (2), wherein the distributing member (2) is composed of at least two partial members (3, 4), which are located closely together at mutually associated end faces (41, 44) and which are penetrated by feed bores (28, 31, 34), **characterised in that** the end faces each have at least one moulded element (42-46), the moulded elements (42-46) of the partial members (3, 4) together forming a moulded element pair, by means of which the partial members (3, 4) are connected to one another positively and in the correct position.

2. Device according to claim 1, **characterised in that** the feed bores (26-34) are distributed at regular angular spacings (α) about the longitudinal axis (L) of the distributing member (2).

3. Device according to any one of the preceding claims, **characterised in that** the spacing between the feed bores (26-34) is less than 1 mm.

4. Device according to any one of the preceding claims, **characterised in that** the discharge bores (18-24) are in each case combined into groups and each group is allocated to a peripheral segment of the distributing member (2).

5. Device according to claim 4, **characterised in that** at least three respective discharge bores (18-24) are allocated to each group.

6. Device according to any one of the preceding claims, **characterised in that** the moulded element pair is formed by a projection (42) formed on one partial member (4) and a recess (43) correspondingly moulded into the other partial member (3).

7. Device according to claim 6, **characterised in that** the moulded elements have a shape differing from a cylinder.

8. Device according to claim 6, **characterised in that** at least two moulded element pairs are present, of which at least one is oriented offset with respect to the longitudinal axis (L) of the distributing member (2).

9. Device according to claim 8, **characterised in that** the moulded elements of the moulded element pairs have a cylindrical shape.

## Revendications

1. Dispositif pour la répartition d'un flux de lubrifiant, refoulé au moyen d'un flux gazeux, en particulier d'un flux d'air, lequel comprend un corps de répartition (2), qui est doté d'une pluralité d'alésages d'admission de flux (26 - 34), qui partent de sa face frontale (36) et s'étendent le long de son axe longitudinal (L) et à axe parallèle les uns par rapport aux autres, et d'alésage de sortie de flux (18 - 24), qui sont reliés chacun à l'un des alésages d'admission de flux (26 - 34) et débouchent sur une surface périphérique du corps de répartition (2), sachant que le corps de répartition (2) est composé d'au moins deux parties (3, 4), qui sont étroitement proches l'une de l'autre, à leurs faces frontales (41 -44) respectives, et qui sont transpercées par les alésages d'admission de flux (28, 31, 34), **caractérisé en ce que** les faces frontales présentent chacune au moins un élément façonné (42 - 46), sachant que lesdits éléments façonnés (42 - 46) des parties de corps (3, 4) forment ensemble un couple d'éléments façonnés au moyen duquel les parties de corps (3, 4) sont reliées ensemble par emboîtement et dans la position voulue.

2. Dispositif selon la revendication 1, **caractérisé en ce que** les alésages d'admission de flux (26 - 34) sont répartis, à intervalles angulaires (α) réguliers, autour de l'axe longitudinal (L) du corps de répartition (2).

3. Dispositif selon l'une des revendications précédentes, **caractérisé en ce que** la distance entre les alésages d'admission de flux (26 - 34) est inférieure à 1 mm.

4. Dispositif selon l'une des revendications précédentes, **caractérisé en ce que** les alésages de sortie de flux (18 - 24) sont respectivement groupés et que chaque groupe est associé à un segment périphérique du corps de répartition (2).

5. Dispositif selon la revendication 4, **caractérisé en ce qu'**à chaque groupe sont attribués au moins trois alésages de sortie de flux (18 - 24).

6. Dispositif selon l'une des revendications précédentes, **caractérisé en ce que** le couple d'éléments façonnés est formé par une saillie (42), formée sur l'une des parties de corps (4), et un évidement (43), formé de manière correspondante dans l'autre partie de corps (3).

7. Dispositif selon la revendication 6, **caractérisé en ce que** les éléments façonnés présentent une forme divergeant d'un cylindre.

8. Dispositif selon la revendication 6, **caractérisé en ce que** sont prévus au moins deux couples d'éléments façonnés, dont au moins l'un est décalé par rapport à l'axe longitudinal (L) du corps de répartition (2).

9. Dispositif selon la revendication 8, **caractérisé en ce que** le couple d'éléments façonnés présente la forme d'un cylindre.
